Europäisches Patentamt

European Patent Office

Office européen des brevets

(19)

(11) Veröffentlichungsnummer: **0 207 886**
**B1**

# (12) EUROPÄISCHE PATENTSCHRIFT

(45) Veröffentlichungstag der Patentschrift:
**25.01.89**

(21) Anmeldenummer: **86810160.1**

(22) Anmeldetag: **04.04.86**

(51) Int. Cl.⁴: **F16B 13/00**

(54) Spreizdübel zur Abstandsbefestigung.

(30) Priorität: **01.07.85 DE 3523474**

(43) Veröffentlichungstag der Anmeldung:
**07.01.87 Patentblatt 87/2**

(45) Bekanntmachung des Hinweises auf die Patenterteilung:
**25.01.89 Patentblatt 89/4**

(84) Benannte Vertragsstaaten:
**AT BE CH DE FR GB LI NL SE**

(56) Entgegenhaltungen:
**EP-A- 0 110 215**
**CH-A- 645 168**
**DD-A- 217 286**
**DE-A- 3 248 102**

(73) Patentinhaber: **HILTI Aktiengesellschaft,
FL-9494 Schaan(LI)**

(72) Erfinder: **Popp, Franz, Kennedy-Strasse 2,
D-8039 Puchheim(DE)**
Erfinder: **Mirsberger, Helmut, Friedrich-List-Strasse 118,
D-8000 München 70(DE)**
Erfinder: **Triltsch, Rudlf, Ludlstrasse 64/II,
D-8000 München 21(DE)**

(74) Vertreter: **Wildi, Roland, Hilti Aktiengesellschaft
Patentabteilung, FL-9494 Schaan(LI)**

## Beschreibung

Die Erfindung betrifft einen Spreizdübel zur Abstandsbefestigung von Fassadenplatten und dgl. an Bauwerken, mit einer Zentralbohrung, einem in eine bauwerksseitige Aufnahmeöffnung einführbaren, von einem Spreizelement aufweitbaren Spreizbereich, einem entgegen der Einführrichtung an den Spreizbereich anschliessenden Halsteil, der zur Festlegung der Platten zum Spreizbereich hin wenigstens ein die Umfangskontur des Halsteiles überragendes, radial einrückbares Auflager aufweist, wobei der Halsteil im Längsabschnitt des Auflagers wenigstens eine Faltung mit parallel zur Längsrichtung des Dübels verlaufendem Scheitel und V-förmigem Querschnitt aufweist.

Dübel der obengenannten Art werden entweder direkt durch die zu befestigen Fassadenplatten oder durch eine die Fassadenplatten aufnehmende Unterkonstruktion, beispielsweise einen Lattenrost, hindurchgesteckt. Beim Hindurchstecken des Dübels wird der Dübel im Bereich des Auflagers radial auf den Querschnitt der Durchgangsbohrung in der Fassadenplatte oder der Unterkonstruktion zusammengedrückt. Sobald der Dübel jedoch genügend weit durchgesteckt ist, federt der Bereich des Auflagers wieder radial auseinander und hintergreift die Fassadenplatte oder die Unterkonstruktion. Die endgültige Festlegung des Dübels im darunterliegenden Aufnahmematerial des Bauwerkes erfolgt meist erst nach dem genauen axialen Ausrichten der Fassadenplatten bzw. der Unterkonstruktion durch Eindrehen einer Spreizschraube.

Ein bekannter Spreizdübel (DE-A 2 714 503) zur Abstandsbefestigung von Fassadenplatten weist im Bereich des Auflagers sich zum vorderen Ende des Dübels verengende, V-förmige Längsschlitze auf. Diese Längsschlitze ermöglichen beim Durchstecken des Dübels ein radiales Einrücken der Auflager und führen bei direkter Befestigung von Fassadenplatten zu einem Verbindungskanal zwischen der Innenseite und der Aussenseite der Fassade. Somit kann beispielsweise Wasser hinter die Fassade dringen, was auch mittels in die Schlitze einführbarer Füllstücke nicht vollständig verhindert werden kann. Durch die Längsschlitze wird ausserdem die Knicksteifigkeit des Dübels im Bereich des rückwärtigen Endes erheblich herabgesetzt. So ist es möglich, dass der Dübel bei etwas engen Bohrungen gar nicht vollständig durch die Fassadenplatten bzw. durch die Unterkonstruktion hindurchgesteckt werden kann, da die zwischen den Längsschlitzen verbleibenden Stege ausknicken.

Bei einem weiteren bekannten Spreizdübel (DE-A 2 457 499) sind die Längsschlitze von einer dünnen Verschlusshaut überdeckt. Diese Verschlusshaut weist eine in Längsrichtung des Dübels verlaufende Knickstelle auf. Beim Einrücken des Auflagers weicht die Knickstelle radial nach aussen aus. Die Verschlusshaut wird somit im Längsschlitz nach aussen gefaltet. Dadurch entsteht die Gefahr, dass die Knickstelle die Umfangskontur des Dübels derart überragt, dass die Verschlusshaut beim Durchstecken des Dübels durch eine Fassadenplatte beschädigt wird. Die Verschlusshaut kann dann die insbesondere bezüglich Abdichtung an sie gestellte Aufgabe nicht mehr erfüllen.

Der Erfindung liegt die Aufgabe zugrunde, einen Dübel zur Abstandsbefestigung von Fassadenplatten und dergleichen an Bauwerken zu schaffen, der im Bereich des radial einrückbaren Auflagers eine hohe Knicksteifigkeit und ausreichende Abdichtung aufweist.

Gemäss der Erfindung wird dies dadurch erreicht, dass die Faltung als Einfaltung mit nach innen gerichtetem Scheitel ausgebildet ist und sich innerhalb der Projektionsfläche der Umfangskontur des Halsteiles befindet.

Die erfindungsgemässe Ausbildung der Faltung als Einfaltung schafft eine gute Verformbarkeit des Halsteiles beim radialen Einrücken des Auflagers und stellt sicher, dass die verformbaren Wandungsteile nach innen ausweichen. Dadurch wird verhindert, dass die in Umfangsrichtung zwischen dem Auflager angeordneten, verformbaren Wandungsteile mit relativ dünner Wandstärke beim Durchstecken des Dübels durch die Fassadenplatte bzw. durch die Unterkonstruktion nach aussen gedrückt und dabei beschädigt werden können.

Zweckmässigerweise sind insbesondere zur Aufteilung der beispielsweise infolge von Winddruck auftretenden Kräfte zwei einander diametral gegenüberliegende Auflager und Einfaltungen vorgesehen. Die Einfaltungen sind dabei je zwischen den Auflagern angeordnet. Die Auflager können sich beispielsweise etwa je über 1/6 bis 1/4 des Umfanges des Dübels erstrecken.

Beim Durchstecken des Dübels werden die Auflager radial eingerückt. Um dieses Einrücken zu erleichtern und zudem die Knicksteifigkeit des Halsteiles zu verbessern, erstreckt sich vorteilhafterweise die Einfaltung beidseitig über das Auflager hinaus. Die Tiefe der Einfaltung kann über deren gesamte Länge konstant oder vom Auflager her nach beiden Seiten auslaufend sein. Der Öffnungswinkel der Einfaltung kann in unverformtem Zustand des Dübels etwa 120° betragen.

Die Erfindung soll nachstehend anhand der sie beispielsweise wiedergebenden Zeichnungen näher erläutert werden. Es zeigen:

Fig. 1 einen erfindungsgemässen Spreizdübel, in unverformtem Zustand;

Fig. 2 eine Ansicht des Dübels gemäss Fig. 1 in Richtung des Pfeiles II;

Fig. 3 den Halsabschnitt des Dübels gemäss Fig. 1 und 2, beim Durchstecken des Dübels durch einen Lattenrost;

Fig. 4 einen Querschnitt des Dübels gemäss Fig. 3, entlang der Linie IV–IV;

Fig. 5 eine fertige Abstandsbefestigung mittels eines Spreizdübels gemäss Fig. 1 bis 4.

Der erfindungsgemässe Dübel besteht im wesentlichen aus einem insgesamt mit 10 bezeichneten Dübelkörper und einer insgesamt mit 20 bezeichneten Spreizschraube. Der Dübelkörper 10 weist ein in Setzrichtung vorderes Ende 11 und ein rückwärtiges Ende 12 auf. Der an das vordere Ende 11 angrenzende Teil ist als Spreizbereich 13 ausgebildet und ist an seiner Aussenseite mit einer Profilierung versehen. Der Spreizbereich 13 weist einen sich über den gesamten Spreizbereich 13 erstreckenden Längsschlitz 14 und einen senkrecht dazu verlaufenden, sich nur über einen Teil des Spreizbereiches 13 erstreckenden Längsschlitz 15 auf. Der an das rückwärtige Ende 12 anschliessende Bereich des Dübelkörpers 10 ist als Halsteil 16 ausgebildet. Der Halsteil 16 weist gegenüber dem übrigen Dübelkörper eine geringere Wandstärke auf und ist in radialer Richtung verformbar. Etwa im mittleren Bereich des Halsteiles 16 befinden sich zwei einander diametral gegenüberliegend angeordnete Auflager 17. Die Auflager 17 bilden eine Schulter und laufen zum vorderen Ende 11 des Dübelkörpers 10 hin konisch aus.

Wie insbesondere Fig. 2 deutlich zeigt, ist zwischen den beiden Auflagern 17 je eine in Längsrichtung des Dübels verlaufende, im Querschnitt V-förmige Einfaltung 18 angeordnet. Die Einfaltungen 18 erleichtern das radiale Einrücken der Auflager 17 beim Durchstecken des Dübels durch eine Fassadenplatte oder dgl.

Dieser Vorgang ist aus den Fig. 3 und 4 ersichtlich. Beim Durchstecken des Dübelkörpers 10 durch eine insgesamt mit 30 bezeichnete Latte werden die beiden Auflager 17 im Bereich einer Durchgangsbohrung 31 radial nach innen gerückt. Dieses radiale Einrücken der Auflager 17 erfolgt unter weiterem Zusammenfalten der Einfaltungen 18. Der Scheitel der Einfaltungen 18 nähert sich dabei der Längsachse des Dübelkörpers 10. Sobald der Dübelkörper 10 soweit durch die Latte 30 gesteckt ist, dass die Auflager 17 die Latte 30 hintergreifen können, werden die Auflager 17 infolge der Elastizität der Einfaltungen 18 wieder radial nach aussen gerückt. Die Auflager 17 bilden nun bauwerkseitig eine Anlage für die Latte 30. Der Abstand der Latte 30 von einem insgesamt mit 40 bezeichneten Bauwerk kann durch axiales Verschieben des Dübelkörpers 10 mitsamt der Latte 30 eingestellt werden. Ist der gewünschte Abstand erreicht, so wird eine insgesamt mit 20 bezeichnete Spreizschraube in eine Zentralbohrung 19 des Dübelkörpers 10 eingeschraubt. Die Spreizschraube 20 weist zu diesem Zweck einen Schaft 21, ein Gewindeteil 22 und einen am rückwärtigen Ende angeordneten Sechskantkopf 23 auf. Beim Einschrauben des Gewindeteils 22 in den Spreizbereich 13 des Dübelkörpers 10 wird dieser radial aufgeweitet und im Bauwerk 40 mit einer Aufnahmebohrung 41 verspreizt. Nach dem vollständigen Eindrehen der Spreizschraube 20 ist die Latte 30 zusammen mit einer Unterlagscheibe 50 zwischen dem Sechskantkopf 23 und dem Auflager 17 eingespannt. Für ein allfälliges Nachjustieren der Latte 30 muss die Spreizschraube 20 wieder soweit herausgedreht werden, bis sich der Spreizbereich 13 in der Aufnahmebohrung 41 axial verschieben lässt.

## Patentansprüche

1. Spreizdübel zur Abstandsbefestigung von Fassadenplatten (30) und dergleichen an Bauwerken (40), mit einer Zentralbohrung, einem in eine bauwerkseitige Aufnahmeöffnung einführbaren, von einem Spreizelement (20) aufweitbaren Spreizbereich (13), einem entgegen der Einführrichtung an den Spreizbereich (13) anschliessenden Halsteil (16), der zur Festlegung der Platten (30) zum Spreizbereich (13) hin wenigstens ein die Umfangskontur des Halsteiles (16) überragendes, radial einrückbares Auflager (17) aufweist, wobei der Halsteil (16) im Längsabschnitt des Auflagers (17) wenigstens eine Faltung mit parallel zur Längsrichtung des Dübels verlaufendem Scheitel und V-förmigem Querschnitt aufweist, dadurch gekennzeichnet, dass die Faltung als Einfaltung (18) mit nach innen gerichtetem Scheitel ausgebildet ist und sich innerhalb der Projektionsfläche der Umfangskontur des Halsteiles (16) befindet.

2. Spreizdübel nach Anspruch 1, dadurch gekennzeichnet, dass je zwei einander diametral gegenüberliegende Auflager (17) und Einfaltungen (18) vorgesehen sind.

3. Spreizdübel nach einem der Ansprüche 1 oder 2, dadurch gekennzeichnet, dass sich die Einfaltung (18) beidseitig über das Auflager (17) hinaus erstreckt.

## Claims

1. An expansible dowel for the spaced fastening of facing plates (30) and the like to buildings (40), comprising a central bore, an expansion region (13) which can be introduced into a reception aperture in a building and which can be expanded by an expansion element (20), a neck part (16) which, contrary to the insertion direction, adjoins the expansion region (13) and which, for the securing of the plates (30), has, towards the expansion region (13) at least one radially engageable bearing surface (17) which projects beyond the circumferential contour of the neck part (16), in which respect the neck part (16) in the longitudinal portion of the bearing surface (17) has at least one fold having an apex extending parallel to the longitudinal direction of the dowel and a V-shaped cross-section, characterised in that the fold is designed as a folding-in (18) having an inwardly directed apex and is disposed within the projection surface of the circumferential contour of the neck part (16).

2. An expansible dowel according to claim 1, characterised in that two mutually diametrically opposite bearing surfaces (17) and foldings-in (18) are provided.

3. An expansible dowel according to one of claims 1 or 2, characterised in that the folding-in (18) extends on both sides beyond the bearing surface (17).

## Revendications

1. Cheville expansible pour la fixation espacée de plaques de façade (30) et analogues sur des bâtiments (40), comprenant un trou central, une région expansible (13) pouvant être introduite dans une ouverture de réception prévue dans le bâtiment et être élargie par un élément d'écartement (20), une partie de collet (16) se raccordant à la région expansible (13) dans le sens inverse de la direction de l'introduction, qui comprend en vue de la fixation des plaques (30) et en direction de la région expansible (13) au moins un appui (17) pouvant se rétracter radialement vers l'intérieur, dépassant le contour périphérique de la partie de collet (16), la partie de collet (16) comprenant dans la section longitudinale de l'appui (17) au moins une pliure dont les côtés sont parallèles à la direction longitudinale de la cheville et dont la section est en forme de V, caractérisée en ce que la pliure est constituée sous forme d'un repli (18) dont les côtés sont dirigés vers l'intérieur et qui est prévu à l'intérieur de la surface de projection de contour périphérique de la partie de collet (16).

2. Cheville expansible selon la revendication 1, caractérisée en ce que sont prévus deux appuis (17) et deux replis (18) situés diamétralement à l'opposé l'un de l'autre.

3. Cheville expansible selon la revendication 1, caractérisée en ce que le repli (18) s'étend de chaque côté au-delà de l'appui (17).